# EUROPEAN PATENT APPLICATION

(11) **EP 4 675 724 A1**
(43) Date of publication of application: **07.01.2026**
(21) Application number: 24763522.0
(22) Date of filing: 05.02.2024
(51) Int. Cl.: H01M 10/04, H01M 10/052, H01M 10/0587

(54) **CYLINDRICAL BATTERY**

(30) Priority: 27.02.2023 JP 2023028126
(71) Applicant: Panasonic Energy Co., Ltd., Osaka 570-8511 (JP)
(72) Inventor: WAKABAYASHI, Hiromichi, Kadoma-shi, Osaka 571-0057 (JP); ITO, Katsuya, Kadoma-shi, Osaka 571-0057 (JP); IMAOKU, Takao, Kadoma-shi, Osaka 571-0057 (JP); FUKUI, Kosuke, Kadoma-shi, Osaka 571-0057 (JP)
(74) Representative: Eisenführ Speiser
(86) International application number: PCT/JP2024/003616
(87) International publication number: WO 2024/181038

(57) **Abstract**

A cylindrical battery (10) comprises a wound electrode body (14) in which a positive electrode (11) and a negative electrode (12) are wound spirally with a separator (13) interposed therebetween. The negative electrode (12) comprises a negative electrode core body (40), a negative electrode lead (21) joined to a winding-start-side end portion of the negative electrode core body (40), and a negative electrode mixture layer (18) formed on the winding end side relative to the negative electrode lead (21). The negative electrode core body (40) (core body exposed portion (43)) includes a folded portion (45) that is folded in a Z-shape between the negative electrode lead (21) and a winding-start-side end of the negative electrode mixture layer (41).

## Description

### TECHNICAL FIELD

The present disclosure relates to a cylindrical battery.

### BACKGROUND ART

A cylindrical battery comprises an electrode assembly in which a positive electrode and a negative electrode are spirally wound with a separator interposed therebetween. In the cylindrical battery, when charge and discharge cycles are repeated the positive electrode and the negative electrode expand and contract, which may cause electrode plate deformation such that at least one of the positive electrode and the negative electrode is locally deformed.

For example, PATENT LITERATURE 1 discloses a cylindrical battery that comprises a wound electrode assembly having an insulating tape stuck to the negative electrode so as to straddle a surface of the negative electrode lead in a winding direction in order to suppress deformation of a joint portion of a negative electrode lead.

### CITATION LIST

### PATENT LITERATURE

PATENT LITERATURE 1: International Publication No. WO 2018/180748

### SUMMARY

Incidentally, inside the electrode assembly of the cylindrical battery, a step is formed along the winding direction due to a winding start side end portion of the positive electrode, which may cause deformation of a negative electrode portion facing the winding start side end of the positive electrode via the separator accompanied with the above-described charge and discharge cycles. In a case where deformation of the negative electrode portion occurs, a distance between the positive and negative electrodes varies, which may result in inhomogeneous charging and discharging reaction and degradation of cycle characteristics.

The insulating tape of PATENT LITERATURE 1 may not be able to sufficiently suppress the deformation of the negative electrode portion facing the winding start side end portion of the positive electrode. In PATENT LITERATURE 1, when the insulating tape is stuck to the negative electrode, the capacity of the cylindrical battery may decrease.

It is an advantage of the present disclosure to provide a cylindrical battery that can suppress deformation of a negative electrode portion facing a winding start side end portion of a positive electrode accompanied with charge and discharge cycles.

A cylindrical battery according to the present disclosure comprises an electrode assembly in which a positive electrode and a negative electrode are spirally wound with a separator interposed between the positive electrode and the negative electrode, in which the negative electrode has a core, a negative electrode lead joined to a winding start side end portion of the core, and a mixture layer formed on a winding finish side with respect to the negative electrode lead, and the core includes a folded portion that is folded in a Z shape between the negative electrode lead and a winding start side end of the mixture layer.

According to the cylindrical battery of the present disclosure, there can be suppressed deformation of a negative electrode portion facing a winding start side end portion of a positive electrode accompanied with charge and discharge cycles.

### BRIEF DESCRIPTION OF DRAWING

FIG. 1 is an axial sectional view of a cylindrical battery which is one example of an embodiment.
FIG. 2 is a schematic diagram illustrating a radial cross section of a winding start side of an electrode assembly.

### DESCRIPTION OF EMBODIMENTS

Hereinafter, one example of an embodiment of the present disclosure will be described in detail. In the following description, specific shapes, materials, directions, values, and the like, which are examples for facilitating understanding of the present disclosure, may be appropriately changed in accordance with use, purpose, specifications, or the like.

### [Cylindrical Battery]

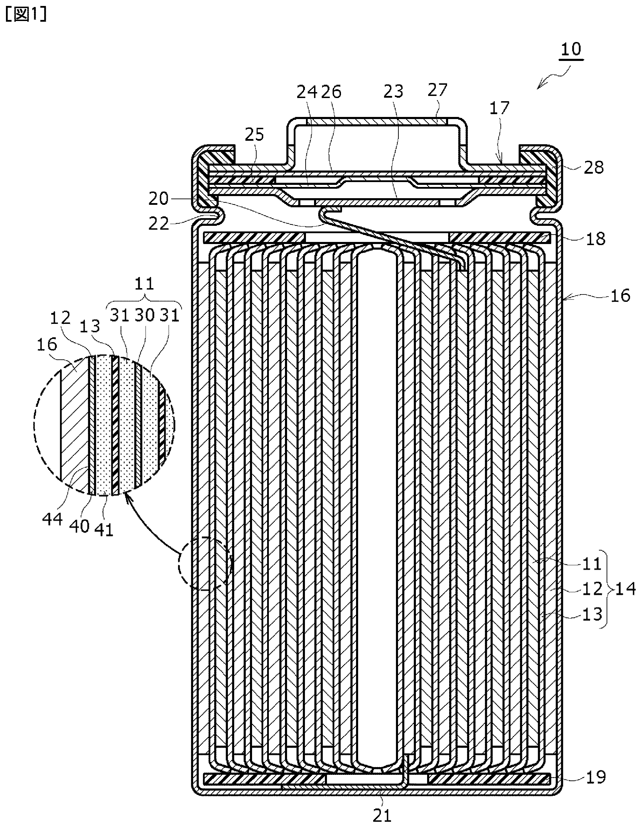

Referring to FIG. 1, a cylindrical battery 10 which is one example of an embodiment will be described.

The cylindrical battery 10 comprises an electrode assembly 14 that includes a positive electrode 11, a negative electrode 12, and a separator 13 and in which the positive electrode 11 and the negative electrode 12 are wound with the separator 13 interposed therebetween. In addition, the cylindrical battery 10 comprises a bottomed cylindrical exterior housing can 16 that houses the electrode assembly 14, and a sealing assembly 17 with which an opening portion of the exterior housing can 16 is capped. An electrolyte is housed together with the electrode assembly 14 in the exterior housing can 16. The exterior housing can 16 has a grooved portion 22 formed in a side wall, and the sealing assembly 17 is supported by the grooved portion 22 to cap the opening portion of the exterior housing can 16. Hereinafter, for convenience of description, the sealing assembly 17 side of the cylindrical battery 10 will be described as "the upper side", and the bottom side of the exterior housing can 16 will be described as "the lower side".

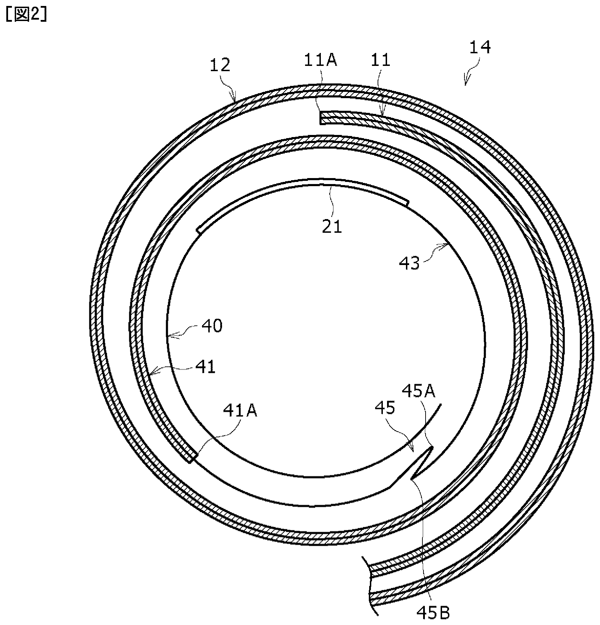

Although details will be described later, the negative electrode 12 has a negative electrode core 40, a negative electrode lead 21 joined to a winding start side end portion of the negative electrode core 40, and a negative electrode mixture layer 41 formed on a winding finish side with respect to the negative electrode lead 21. The negative electrode core 40 (core exposed portion 43) includes a folded portion 45 that is folded in a Z shape between the negative electrode lead 21 and a winding start side end portion of the negative electrode mixture layer 41 (see FIG. 2). The folded portion 45 makes it possible to suppress deformation of a portion of the negative electrode 12 facing the winding start side end portion of the positive electrode 11 accompanied with charge and discharge cycles.

The electrolyte may be an aqueous electrolyte, but a non-aqueous electrolyte shall be used in the present embodiment. The non-aqueous electrolyte has a lithium ion conductivity. The non-aqueous electrolyte may be a liquid electrolyte (electrolytic solution) or a solid electrolyte. The cylindrical battery 10 is, for example, a non-aqueous secondary battery, and is preferably a lithium ion battery among the batteries.

The liquid electrolyte (electrolytic solution) includes a non-aqueous solvent, and an electrolyte salt dissolved in the non-aqueous solvent. For the non-aqueous solvent, esters, ethers, nitriles, amides, and mixed solvents containing two or more selected from the foregoing are used, for example. Examples of non-aqueous solvent include ethylene carbonate (EC), ethyl methyl carbonate (EMC), dimethyl carbonate (DMC), diethyl carbonate (DEC), and mixed solvents thereof. The non-aqueous solvent may contain a halogen-substituted product (for example, fluoroethylene carbonate) obtained by substituting at least some of hydrogen atoms in these solvents with a halogen atom such as fluorine. As the electrolyte salt, a lithium salt such as LiPF₆ is used.

As the solid electrolyte, for example, a solid-state or gel-like polymer electrolyte, an inorganic solid electrolyte, or the like can be used. As the inorganic solid electrolyte, a known material (for example, an oxide solid electrolyte, a sulfide solid electrolyte, a halogen solid electrolyte, or the like) of an all-solid lithium ion secondary battery or the like can be used. A polymer electrolyte includes, for example, a lithium salt and matrix polymer, or non-aqueous solvent, a lithium salt and matrix polymer. As the matrix polymer, for example, a polymer material that gelatinizes by absorbing the non-aqueous solvent is used. Examples of the polymer material include a fluorine resin, an acrylic resin, and a polyether resin.

As described above, the electrode assembly 14 has a wound structure in which the positive electrode 11 and the negative electrode 12 are spirally wound with the separator 13 interposed therebetween. Any of the positive electrode 11, the negative electrode 12, and the separator 13 is a band-shaped elongated member, and spirally wound to be alternately stacked in the radial direction of the electrode assembly 14. The negative electrode 12 is formed to be one size larger than the positive electrode 11 in order to prevent precipitation of lithium. That is, the negative electrode 12 is formed to be longer in the longitudinal direction and the width direction than the positive electrode 11. The two separators 13 are each formed to be at least one size larger than the positive electrode 11, and are disposed so as to interpose the positive electrode 11 therebetween, for example.

The electrode assembly 14 has a positive electrode lead 20 joined to the positive electrode 11, and a negative electrode lead 21 joined to the negative electrode 12. In the present embodiment, the positive electrode lead 20 is provided at a longitudinal center portion of the positive electrode 11 which is a position away from a winding start side end and a winding finish side end of the electrode assembly 14. On the other hand, the negative electrode lead 21 is provided at one end portion of the negative electrode 12 in the longitudinal direction that is located on a winding start side of the electrode assembly 14. The negative electrode 12 has a first core exposed portion 43 (see FIG. 2) where the negative electrode mixture layer 41 is not present. The negative electrode lead 21 is joined to the core exposed portion 43.

The positive electrode 11 has a positive electrode core 30, and a positive electrode mixture layer 31 formed on at least one surface of the core. For the positive electrode core 30, a foil of a metal, such as aluminum or an aluminum alloy, which is stable within a potential range of the positive electrode 11, a film in which such a metal is disposed on a surface layer thereof, and the like may be used. The positive electrode mixture layer 31 includes a positive electrode active material, a conductive agent such as acetylene black, and a binder such as polyvinylidene fluoride (PVdF), and is preferably formed on each surface of the positive electrode core 30. A thickness of the positive electrode mixture layer 31 is, for example, greater than or equal to 40 µm and less than or equal to 100 µm. For the positive electrode active material, for example, a lithium-transition metal composite oxide containing Ni, Co, Mn, and Al is used. Note that the positive electrode lead 20 is preferably joined directly to the positive electrode core 30 by means of ultrasonic welding or the like.

The negative electrode 12 has a negative electrode core 40, and a negative electrode mixture layer 41 formed on at least one surface of the core. For the negative electrode core 40, a foil of a metal, such as copper or a copper alloy, which is stable within a potential range of the negative electrode 12, a film in which such a metal is disposed on a surface layer thereof, and the like may be used. The negative electrode mixture layer 41 includes a negative electrode active material, and a binder such as a styrene-butadiene rubber (SBR), and is preferably formed on each surface of the negative electrode core 40. A thickness of the negative electrode mixture layer 41 is, for example, greater than or equal to 40 µm and less than or equal to 100 µm. For the negative electrode active material, for example, graphite or an Si-containing material is used. The negative electrode lead 21 is preferably joined directly to the negative electrode core 40 by means of ultrasonic welding or the like.

The cylindrical battery 10 comprises an upper insulating plate 18 that is disposed between the sealing assembly 17 and an electrode group, and has an opening portion through which the positive electrode lead 20 passes. In the present specification, the electrode group means a portion of the electrode assembly 14 including the positive electrode 11, the negative electrode 12, and the separator 13, but not including the positive electrode lead 20 and the negative electrode lead 21. The cylindrical battery 10 comprises a lower insulating plate 19 that is disposed between an inner surface of a bottom portion of the exterior housing can 16 and the electrode group, and has an opening portion through which the negative electrode lead 21 passes.

In the example illustrated in FIG. 1, the positive electrode lead 20 passes through the opening portion in the upper insulating plate 18 and extends toward the sealing assembly 17 side, and the negative electrode lead 21 passes through the opening portion in the lower insulating plate 19 and extends toward the bottom portion side of the exterior housing can 16. The positive electrode lead 20 is connected to a lower surface of a bottom plate 23 of the sealing assembly 17 by means of welding or the like, and the sealing assembly 17 serves as a positive electrode terminal. The negative electrode lead 21 is connected to an inner surface of the bottom portion of the exterior housing can 16 by means of welding or the like, and the exterior housing can 16 serves as a negative electrode terminal.

On the outermost circumference surface of the electrode assembly 14, the negative electrode 12 is disposed, and a second core exposed portion 44 where a surface of the negative electrode core 40 is exposed is provided. Then, the core exposed portion 44 is in contact with an inner circumferential surface of the exterior housing can 16. When the core exposed portion 44 is in contact with the inner circumferential surface of the exterior housing can 16 serving as the negative electrode terminal, both end portions of the negative electrode 12 in the longitudinal direction are electrically connected to the exterior housing can 16, so that good current collecting performance can be ensured. Although the core exposed portion 44 may be provided in a part of the outermost circumferential surface of the electrode assembly 14, the core exposed portion is preferably provided in the entire area of the outermost circumferential surface. For example, a portion where the negative electrode mixture layer 41 is not present on a winding outer surface of the negative electrode core 40 is provided with a length of one lap or more from the winding finish end of the negative electrode 12.

The exterior housing can 16 is a bottomed cylindrical metallic container. A gasket 28 is provided between the exterior housing can 16 and the sealing assembly 17, and the interior of the battery is sealed. The exterior housing can 16 has the grooved portion 22 which is formed by, for example, pressing a side surface portion from the outside. The grooved portion 22 is preferably formed in an annular shape along the circumferential direction of the exterior housing can 16, and supports the sealing assembly 17 on its upper surface. In addition, an upper end portion of the exterior housing can 16 is bent inward and is crimped on a peripheral edge portion of the sealing assembly 17.

The sealing assembly 17 has a stacked structure of the bottom plate 23, a lower vent member 24, an insulating member 25, an upper vent member 26, and a cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected to each other at respective center portions, and the insulating member 25 is interposed between the circumferential edge portions of the vent members 24 and 26. If the internal pressure of the battery increases, the lower vent member 24 is deformed to push up the upper vent member 26 toward the cap 27 side and ruptures, resulting in cutting off of a current pathway between the lower vent member 24 and the upper vent member 26. If the internal pressure further increases, the upper vent member 26 ruptures, and gas is discharged through an opening portion of the cap 27.

### [Folded Portion]

Referring to FIG. 2, the folded portion 45 will be described. FIG. 2 is a schematic diagram illustrating a radial cross section of the winding start side of the electrode assembly 14. In FIG. 2, the separator 13 is not illustrated for the sake of clarity of illustration.

The folded portion 45 is a portion where the negative electrode core 40 is folded in a S shape between the negative electrode lead 21 and the winding start side end 41A of the negative electrode mixture layer 41. In the present embodiment, the length of the core exposed portion 43 is, for example, a length of windings of substantially 1.25 turns.

In the cylindrical battery 10, when charge and discharge cycles are repeated, the positive electrode 11 and the negative electrode 12 expand and contract, which may cause electrode plate deformation such that at least one of the positive electrode 11 and the negative electrode 12 is locally deformed. In addition, in the cylindrical battery 10, a step is formed at a position straddling the winding start side end 11A of the positive electrode 11 along the winding direction, which may cause deformation of a portion of the negative electrode 12 facing the winding start side end portion of the positive electrode 11 accompanied with the charge and discharge cycles. In a case where deformation of the portion of the negative electrode 12 occurs, a distance between the positive and negative electrodes varies, which may result in inhomogeneous charging and discharging reaction and degradation of cycle characteristics. Note that the winding start side end portion of the positive electrode 11 means the winding start side end 11A and its vicinity.

Forming the folded portion 45 helps to alleviate a stress by preferentially deforming the folded portion 45 in a case where the above-described stress is applied to the portion of the negative electrode 12 facing the winding start side end portion of the positive electrode 11 due to the repeated charge and discharge cycles, so that the deformation of the portion of the negative electrode 12 facing the winding start side end portion of the positive electrode 11 is suppressed. This makes it possible to prevent a variation in distance between the positive and negative electrodes to ensure a homogeneous charge and discharge reaction, and maintain good cycle characteristics. Note that since the folded portion 45 is formed in a portion of the negative electrode 11 which does not face the positive electrode through the separator 13, an effect on the distance between the positive and negative electrodes is small even when the folded portion 45 is deformed.

The folded portion 45 has a bent portion 45A and a bent portion 45B at both ends in the winding direction. The bent portion 45A is disposed on a winding start side of the folded portion 45, and the bent portion 45B is disposed on a winding finish side of the folded portion 45. The folded portion 45 is formed so that the bent portion 45A on the winding start side faces an inner side of the winding, and the bent portion 45B on the winding finish side faces an outer side of the winding. Although details will be described later, this makes it easy to deform the folded portion 45 toward a hollow portion side of the electrode assembly 14, which can further reduce the effect on the deformation of the folded portion 45 on distance between the positive and negative electrodes.

In a case where the stress is applied to the portion of the negative electrode 12 facing the winding start side end portion of the positive electrode 11, a part of the stress is transferred to the winding start side along the winding direction of the negative electrode 12 so that the bent portion 45A on the winding start side is easily deformed. Therefore, when the folded portion 45 is formed so that the bent portion 45A on the winding start side faces an inner side of the winding, and the bent portion 45B on the winding finish side faces an outer side of the winding, the folded portion 45 is easily deformed toward the hollow portion side of the electrode assembly 14.

The folded portion 45 is formed in the negative electrode 12 on the winding finish side with respect to a position where the negative electrode 12 is wound one turn from a position facing the winding start side end 11A of the positive electrode 11 toward the winding start side. This makes it easy to deform the folded portion 45 so that the folded portion 45 absorbs a stress in a case where the stress is applied to the portion of the negative electrode 12 facing the winding start side end portion of the positive electrode 11.

Here, when the winding start side of the negative electrode 12 is described in detail, the winding start side end 41A of the negative electrode mixture layer 41 is located on the winding start side with respect to the inner side of the winding of the winding start side end 11A of the positive electrode 11. Therefore, the folded portion 45 is formed at a position which does not face the positive electrode 11 through the separator 13. The joint position of the negative electrode lead 21 is not limited to a particular position, but for example, can be within a range from greater than or equal to 0.5 turns to less than or equal to 1.5 turns from the winding start side 41 end of the negative electrode mixture layer 41 toward the winding start side.

It should be noted that the present disclosure is not limited to the above-described embodiments and modifications thereof, and it goes without saying that various changes and improvements can be made within the scope of the matters described in the claims of the present application.

The present disclosure is further described by the following embodiments.

Configuration 1: A cylindrical battery comprising an electrode assembly in which a positive electrode and a negative electrode are spirally wound with a separator interposed between the positive electrode and the negative electrode, wherein the negative electrode has a core, a negative electrode lead joined to a winding start side end portion of the core, and a mixture layer formed on a winding finish side with respect to the negative electrode lead, and the core includes a folded portion that is folded in a Z shape between the negative electrode lead and a winding start side end of the mixture layer.

Configuration 2: The cylindrical battery according to configuration 1, wherein the folded portion is formed so that a bent portion on a winding start side faces an inner side of winding, and a bent portion on the winding finish side faces an outer side of the winding.

Configuration 3: The cylindrical battery according to configuration 1 or 2, wherein the folded portion is formed in the negative electrode on the winding finish side with respect to a position where the negative electrode is wound one turn from a position facing an inner side of winding of a winding start side end of the positive electrode toward a winding start side.

### REFERENCE SIGNS LIST

10 Cylindrical battery, 11 Positive electrode, 11A Winding start side end (positive electrode), 12 Negative electrode, 13 Separator, 14 Electrode assembly, 16 Exterior housing can, 17 Sealing assembly, 18 Upper insulating plate, 19 Lower insulating plate, 20 Positive electrode lead, 21 Negative electrode lead, 22 Grooved portion, 23 Bottom plate, 24 Lower vent member, 25 Insulating member, 26 Upper vent member, 27 Cap, 28 Gasket, 30 Positive electrode core, 31 Positive electrode mixture layer, 40 Negative electrode core, 41 Negative electrode mixture layer, 41A Winding start side end (negative electrode mixture layer), 43 First core exposed portion, 44 Second core exposed portion, 45 Folded portion, 45A Bent portion, 45B Bent portion

## Claims

1. A cylindrical battery comprising an electrode assembly in which a positive electrode and a negative electrode are spirally wound with a separator interposed between the positive electrode and the negative electrode, wherein
the negative electrode has a core, a negative electrode lead joined to a winding start side end portion of the core, and a mixture layer formed on a winding finish side with respect to the negative electrode lead, and
the core includes a folded portion that is folded in a Z shape between the negative electrode lead and a winding start side end of the mixture layer.

2. The cylindrical battery according to claim 1, wherein
the folded portion is formed so that a bent portion on a winding start side faces an outer side of winding, and a bent portion on the winding finish side faces an inner side of the winding.

3. The cylindrical battery according to claim 1 or 2, wherein
the folded portion is formed in the negative electrode on the winding finish side with respect to a position where the negative electrode is wound one turn from a position facing an inner side of winding of a winding start side end of the positive electrode toward a winding start side.
